**Europäisches Patentamt**

**European Patent Office**

**Office européen des brevets**

(19)

(11) Veröffentlichungsnummer: **0 099 940**
**B1**

(12) **EUROPÄISCHE PATENTSCHRIFT**

(45) Veröffentlichungstag der Patentschrift:
**14.05.86**

(21) Anmeldenummer: **82106843.4**

(22) Anmeldetag: **28.07.82**

(51) Int. Cl.⁴: **G 01 B 9/02**

(54) Verfahren und Vorrichtung zur interferometrischen Messung der geradlinigen Bewegungslänge eines Gegenstands mit Erkennung seiner Bewegungsrichtung.

(43) Veröffentlichungstag der Anmeldung:
**08.02.84 Patentblatt 84/6**

(45) Bekanntmachung des Hinweises auf die Patenterteilung:
**14.05.86 Patentblatt 86/20**

(84) Benannte Vertragsstaaten:
**DE FR GB NL**

(56) Entgegenhaltungen:
**DE - A - 2 926 738**
**DE - A - 3 044 183**
**FR - A - 2 375 577**
**US - A - 4 153 370**

**ALTA FREQUENZA, Band 41, Nr. 11, November 1972, Seiten 887-896, Mailand, IT., W.R.C. ROWLEY: "Interferometric measurement of length and distance"**

(73) Patentinhaber: **H. MAIHAK AG, Semperstrasse 38, D-2000 Hamburg 60 (DE)**

(72) Erfinder: **Ulrich, Reinhard, Prof.Dr., Alte Rennbahn 2, D-2110 Buchholz (DE)**
Erfinder: **Jansen, Klaus, Kornacker 15, D-2000 Hamburg 54 (DE)**

(74) Vertreter: **Meyer-Roxlau, R.F., Dipl.-Ing. Patentanwalt, Mühlbaurstrasse 38b, D-8000 München 80 (DE)**

## Beschreibung

Die Erfindung betrifft ein Verfahren und eine Vorrichtung zur interferometrischen Messung der Länge der geradlinigen Komponente der von einem sich bewegenden Gegenstand durchlaufenen Bewegungsbahn und zur gleichzeitigen Erkennung der Bewegungsrichtung des Gegenstands gemäss Oberbegriff des Patentanspruchs 1 bzw. 3.

Die Messung von Wegen ist das grundlegende Prinzip bei Messwertaufnehmern für zahlreiche mechanische Grössen wie z.B. Kraft (Gewicht), Druck oder Beschleunigung; denn diese Grössen lassen sich durch geeignete Federn, Membranen bzw. Massen in proportionale Wege umsetzen. Ähnliches gilt für andere Messgrössen wie z.B. thermische, elektrische und magnetische Grössen. Im Rahmen der weiter zunehmenden Automatisierung ist deshalb die Messung von Wegen eine Grundaufgabe der Messtechnik.

Ein wichtiges Problem ist dabei die Zuverlässigkeit und Störungssicherheit sowohl der Messung selbst als auch der Übertragung des Messwertes zur Anzeigeeinheit bzw. zum Auswertungsrechner. Dieses Problem besteht in besonderem Masse bei Anlagen der Energie- und Verfahrenstechnik. wo oft eine erheblich «elektromagnetisch gestörte» Umgebung besteht (z.B. impulsgeregelte elektrische Antriebe, Hochfrequenzöfen, Hochspannungsanlagen). Für solche und andere Anwendungen z.B. in explosionsgefährdeten Räumen erscheint eine rein optische Wegmessung und damit verbundene optische Signalübertragung mittels Lichtleitfasern besonders günstig; denn wegen des sehr grossen Frequenzabstandes zwischen den störenden elektrischen Feldern und dem optischen Bereich des elektromagnetischen Spektrums ist die Störwirkung praktisch vernachlässigbar.

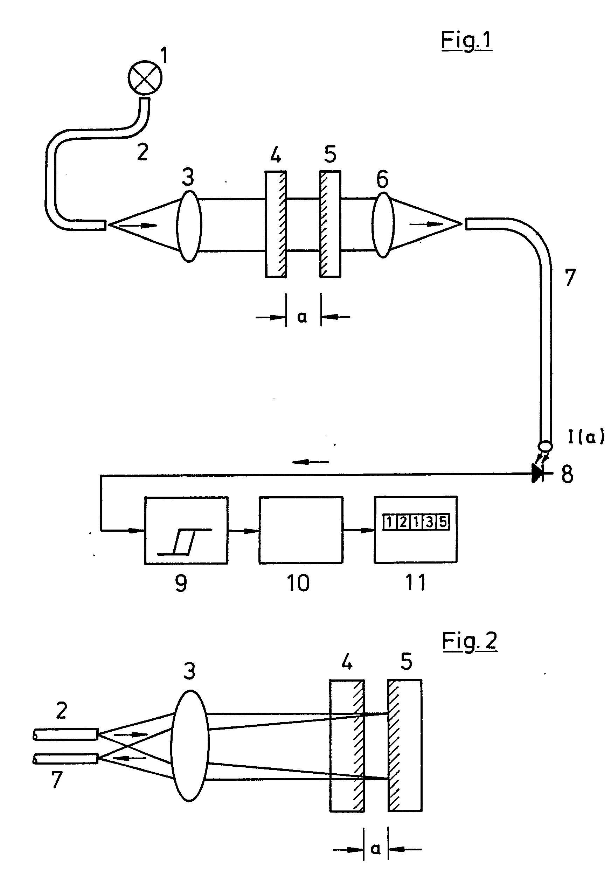

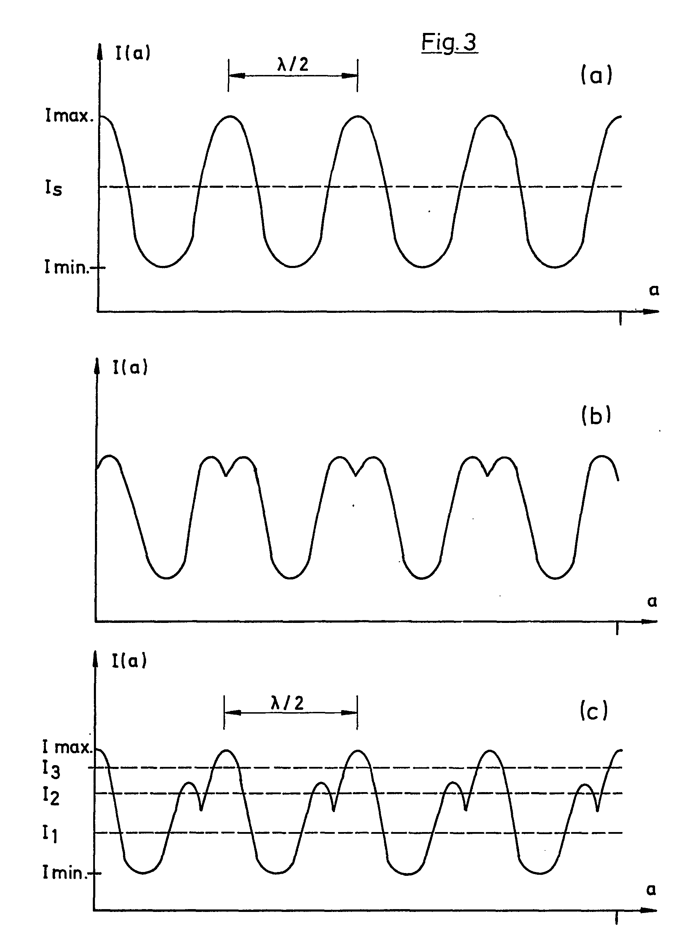

In der Literatur sind verschiedene Konzepte für faseroptische Wegaufnehmer beschrieben, z.B. N. Lagakos et al, «Applied Optics», 20, S. 167/168 (1981) oder W. B. Spillman und D. H. McMahon «Appl. Phys. Lett.» 37, S. 145 bis 147 (1980). Besonders vorteilhaft für eine digitale elektronische Auswertung erscheint ein optischer Wegaufnehmer in Form eines Fabry-Perot-Interferometers [vgl. Born und Wolf «Principles of Optics», Pergamon Press, dritte Ausgabe, S. 323 ff. (1965)], das mit Lichtleitfasern zur Signalübertragung versehen ist. Bei einem solchen in Fig. 1 schematisch in seinem Aufbau dargestellten Instrument wird die vom Abstand a zwischen zwei Reflektoren abhängige Transmission des Lichtes durch das Interferometer zur Messung ausgenutzt. Monochromatisches Licht einer Lichtquelle 1 wird durch einen Lichtleiter 2 und eine Linse 3 auf die Reflektoren 4 und 5 übertragen. Dabei ist der eine Reflektor 4 fest angeordnet, während der zweite Reflektor 5 parallel zum ersten Reflektor 4 beweglich ist und die zu messende Bewegungskomponente (senkrecht zur Oberfläche der Reflektoren 4 und 5) ausführt. Im Gegensatz zu diesem in Fig. 1 dargestellten Aufbau eines Transmissions-Interferometers zeigt Fig. 2 einen Aufbau unter Ausnutzung der Reflexion des Fabry-Perot-Interferometers, wobei vorteilhafterweise beide Lichtleitfasern 2 und 7 auf derselben Seite des Instruments nebeneinanderliegen und im übrigen nur eine einzige Linse 3 benötigt wird, während beim Aufbau gemäss Fig. 1 zusätzlich eine zweite Linse 6 benötigt wird. In beiden Fällen hängt die von der Eingangsfaser 2 zur Ausgangsfaser 7 übertragene und vom Detektor 8 empfangene Lichtintensität I(a) periodisch vom Abstand a zwischen den beiden Reflektoren 4 und 5 des Interferometers ab, wie schematisch in Fig. 3a für den Fall des Interferometers gemäss Fig. 1 angegeben ist. Für ein Interferometer gemäss Fig. 2 sieht die Charakteristik der Lichtintensität I(a) ähnlich aus; sie ist jedoch durch breitere Maxima und schmalere Minima gekennzeichnet. Bei Verwendung einer monochromatischen Lichtquelle 1 mit der Wellenlänge $\lambda$ entspricht die Periode der Veränderung der Intensität I(a) einer Änderung des Abstands von einer halben Wellenlänge. Die Lichtintensität I(a) variiert dabei zwischen einem Maximalwert $I_{max}$ und einem Minimalwert $I_{min}$; proportional hierzu variiert das Detektorsignal. Wird in der nachfolgenden Elektronik eine Triggerstufe 9 verwendet, deren Schwellenwert einer mittleren Lichtintensität $I_s$ zwischen $I_{max}$ und $I_{min}$ entspricht, so erhält man bei Überschreitung des Schwellenwertes am Triggerausgang ein Signal. Bei einer Abstandsänderung, die von ihrer Grösse her gesehen mehreren halben Wellenlängen entspricht, also etwa von der Grösse $\triangle a$, erhält man eine entsprechende Zahl von Ausgangssignalen am Ausgang der Triggerstufe 9, nämlich $\triangle N = 2\triangle a/\lambda$ Ausgangssignale. Diese Signale werden in einem elektronischen Zähler 10 gezählt und in einer Auswerteeinheit 11 entweder angezeigt oder anderweitig (z.B. von einem Microprozessor zur Prozesssteuerung) ausgewertet. Das in seinem Aufbau in Fig. 1 dargestellte Instrument stellt also einen einfachen, faseroptischen inkrementalen Wegaufnehmer für den Abstand a zwischen den beiden Reflektoren dar.

Von ihrem prinzipiellen Aufbau her ist diese bekannte Einrichtung jedoch mit einem grundsätzlichen Nachteil behaftet: Sie kann nämlich nicht unterscheiden zwischen solchen Wegänderungen $\triangle a$, die den Abstand a vergrössern, und solchen Wegänderungen $\triangle a$, die den Abstand a verkleinern. Der Grund hierfür liegt in der Symmetrie der Maxima der vom Detektor empfangenen Lichtintensität bzw. des hierzu proportionalen Detektorsignals.

Der Erfindung liegt daher die Aufgabe zugrunde, die Vorrichtung und das Verfahren der eingangs bezeichneten Gattung so weiterzuentwickeln, dass eine Erkennung der Bewegungsrichtung möglich ist und damit bei Verwendung eines Vorwärts-Rückwärtszählers diesen entsprechend der jeweils augenblicklichen Bewegungsrichtung vorwärts bzw. rückwärts zählen zu lassen, was bisher nicht möglich war, da die bisher dem Zähler zugeführten Triggersignale den Zähler weiterschalteten ohne Rücksicht darauf, ob sich der Abstand zwischen den beiden Reflektoren vergrösserte oder verkleinerte.

Diese Aufgabe wird in verfahrenstechnischer bzw. vorrichtungstechnischer Hinsicht durch die in Anspruch 1 bzw. 3 angegebenen Merkmale gelöst.

Vorteilhafte Weiterbildungen sind aus den Ansprüchen 2 bzw. 4 bis 14 zu ersehen. Dabei ist eine besonders vorteilhafte Ausführungsform der erfindungsgemässen Vorrichtung dadurch erreichtbar, dass einer der beiden Reflektoren des Interferometers so zu strukturieren ist, dass auf einem Teilbereich der Reflektor-Oberfläche die Reflexionsphase um etwa 0,5 π (praktisch im Bereich von 0,1 π bis 0,8 π) gegenüber der Reflexionsphase des anderen Bereichs verändert ist. Alternativ hierzu ist es auch möglich, diese Teilung zu erreichen, indem einer der Reflektoren so gestaltet wird, dass seine Reflexionsphase für einen bestimmten Polarisationszustand um ca. 0,5 π von der Reflexionsphase für den zugehörigen orthogonalen Polarisationszustand abweicht. In beiden Fällen bewirkt die Teilung, dass das Interferometer faktisch aus zwei ineinander geschachtelten Interferometern besteht, die von derselben Lichtquelle gespeist werden und deren Ausgangslicht auf denselben Detektor fällt. Würde das Verhältnis der Aufteilung auf die beiden Interferometer zu 1 : 1 gewählt, so würde die in Fig. 3b gezeigte Abhängigkeit der auf den Detektor fallenden Intensität vom Reflektorabstand a erreicht. In dieser Kurve (Fig. 3b) für den Verlauf der Intensität I(a) stellen die beiden jeweils dicht nebeneinanderliegenden Maxima die Transmissionsmaxima der Einzel-Interferometer dar. Bei der hier angenommenen 1 : 1 Teilung besitzen die Doppelmaxima jedoch immer noch eine Symmetrie, so dass eine Vorwärts-Rückwärts-Unterscheidung noch nicht möglich ist. Diese Unterscheidung wird jedoch sofort möglich, wenn ein Aufteilungsverhältnis anders als 1 : 1 verwendet wird. Beispielsweise zeigt Fig. 3c den Verlauf der Intensität I(a) für den Fall einer Aufteilung etwa im Verhältnis 1 : 0,75. Bei jedem Doppelmaximum liegt das eine Maximum erheblich höher als das andere, und beide Maxima sind durch ein deutlich ausgeprägtes Minimum voneinander getrennt, das jedoch nicht so tief liegt, wie das Hauptminimum zwischen den beiden Maxima einer Periode, die unverändert λ/2 ist, wie bei dem einfachen Aufbau gemäss Fig. 1.

Bei einem asymmetrischen Verlauf der Intensität I vom Abstand a zwischen den beiden Reflektoren gemäss Fig. 3c, ist die Grundlage für die Erkennbarkeit der Bewegungsrichtung gegeben.

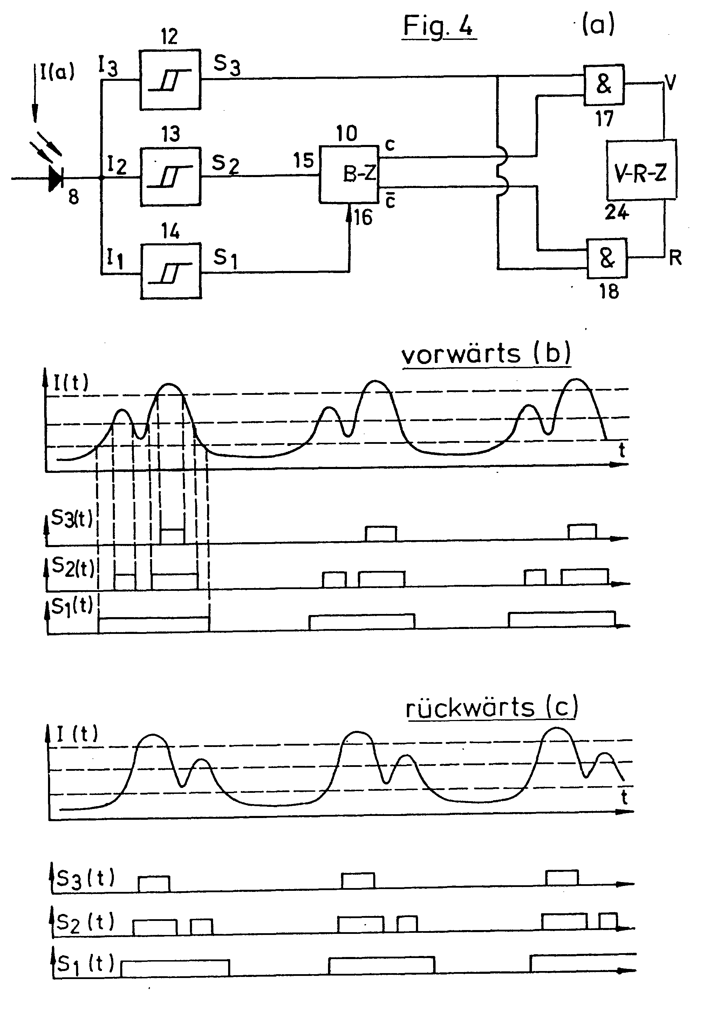

Zur weiteren Lösung der der Erfindung zugrundeliegenden Aufgabe ist daher der besondere Aufbau einer dem Detektor nachgeschalteten Elektronik vorgesehen, wie dieser schematisch in Fig. 4a dargestellt ist. Der vorrichtungstechnische Aufbau dieser Elektronik und ihre verfahrenstechnische Arbeitsweise werden nachfolgend ins Detail gehend beschrieben.

Das zur Reflexions-Intensität I(a) jeweils proportionale Signal des Detektors 8 wird gleichzeitig drei parallel geschalteten elektronischen Triggerstufen 12, 13 und 14 zugeführt, deren Schwellenwerte so gewählt sind, dass sie den in Fig. 3c eingezeichneten Intensitäten $I_1$, $I_2$ und $I_3$ entsprechen. Die Trigger-Ausgangssignale sind logisch «eins», wenn die jeweiligen Trigger-Beaufschlagungssignale die jeweils zugehörigen Schwellenwerte überschreiten. Je nach Bewegungsrichtung («vorwärts»: wachsendes a; «rückwärts»: abnehmendes a) zeigen die Trigger-Ausgangssignale den in Fig. 4b und 4c mit $S_1$, $S_2$ und $S_3$ bezeichneten Verlauf. Der Unterschied zwischen Vorwärts- und Rückwärtsbewegung besteht darin, dass das Ausgangssignal $S_3$ bei Vorwärtsbewegung zeitlich während des zweiten Impulses des Ausgangssignals $S_2$ und damit teilweise während des Ausgangssignals $S_1$ auftritt, während das Ausgangssignal $S_3$ bei Rückwärtsbewegung zeitlich während des ersten Impulses des Ausgangssignals $S_2$ und damit teilweise während des Ausgangssignals $S_1$ auftritt. Dieser Unterschied offenbart sich bei der Verwendung der in ihrem Aufbau in Fig. 4a dargestellten Elektronik dadurch, dass der Binär-Zähler (Flip-Flop) 10 die Vorderflanken der Impulse der Ausgangssignale $S_2$ zählt und dass seine Ausgänge c und $\bar{c}$ (mit ihren zueinander inversen logischen Signalen) zusammen mit den Ausgangssignalen $S_3$ an zwei «Und»-Gatter 17, 18 geführt werden. Die Ausgänge dieser beiden «Und»-Gatter 17, 18 sind in Fig. 4a mit V und R als Symbol für Vorwärts und Rückwärts bezeichnet. Sie werden einzeln dem «Vorwärts»- bzw. «Rückwärts»-Eingang eines Vor-Rückwärtszählers 24 zugeführt, der die Differenz der Impulszahlen dieser beiden Eingänge ermittelt und anzeigt. Diese Differenz ist (einschliesslich des Vorzeichens) gleich der zu messenden Bewegung des Fabry-Perot-Reflektors, ausgedrückt in halben Wellenlängen des Lichtes der Lichtquelle 1. Entsprechend den erläuterten Koinzidenzen zwischen dem Ausgangssignal $S_3$ einerseits und dem zweiten bzw. ersten Impuls des Ausgangssignals $S_2$ andererseits, gelangen also bei der Elektronik gemäss Fig. 4a die Ausgangssignale $S_3$ nur dann an den Ausgang V, wenn die Bewegung eine Vorwärtsbewegung ist, bzw. nur dann an den Ausgang R, wenn die Bewegung eine Rückwärtsbewegung ist. Damit auch bei einem Wechsel der Bewegungsrichtung der Zähler 10 immer richtig die ersten und zweiten Impulse des Ausgangssignals $S_2$ als «innerhalb des Ausgangssignals $S_1$ liegend» zählt, wird der Zähler durch die Vorderflanke eines jeden Ausgangssignals $S_1$ wieder in die Null-Stellung zurückgestellt, nämlich über den als Steuereingang anzusehenden Eingang 16 des Zählers 10. Diese Methode der Richtungserkennung ist unabhängig von der Geschwindigkeit, mit der sich der Abstand a ändert, d.h. insbesondere arbeitet sie auch ordnungsgemäss bei sehr langsam ablaufenden Bewegungen. Zur Vermeidung möglicher Fehler bei der Richtungserkennung infolge von Zitterbewegungen ist es zweckmässig, die Triggerstufen mit einer gewissen Hysterese zu versehen, die grösser ist als die Amplitude der möglichen Zitterbewegung.

Es bestehen grundsätzlich auch weitere Möglichkeiten zur Auswertung des asymmetrischen Intensitätsverlaufs bezüglich der Erkennung der Vorwärts/Rückwärts-Bewegung. In jedem Fall ist es jedoch notwendig, ein Intensitätssignal I(a) zu verwenden, dessen Verlauf in jeder Periode durch die Existenz zweier eng benachbarter, verschieden hoher Maxima charakterisiert ist, die durch ein deutlich ausgeprägtes Nebenminimum getrennt sind. Letzteres darf jedoch nicht so tief sein wie das Hauptminimum zwischen zwei benachbarten Doppelmaxima.

Der Schwellenwert für die Triggerstufe 14 wird zweckmässig so gewählt, dass er etwa in der Mitte liegt zwischen dem Haupt- und dem Nebenmaximum. Ähnlich wird der Schwellenwert für die Triggerstufe 13 optimalerweise in der Mitte zwischen dem Nebenminimum und dem Nebenmaximum gewählt, während der Schwellenwert für die Triggerstufe 12 etwa in der Mitte zwischen dem Haupt- und Nebenmaximum gewählt wird. Bei dieser Wahl der Schwellenwerte ist die Anordnung am wenigsten empfindlich gegen geringfügige Schwankungen der Grösse der Schwellenwerte oder des Gesamt-Signalpegels.

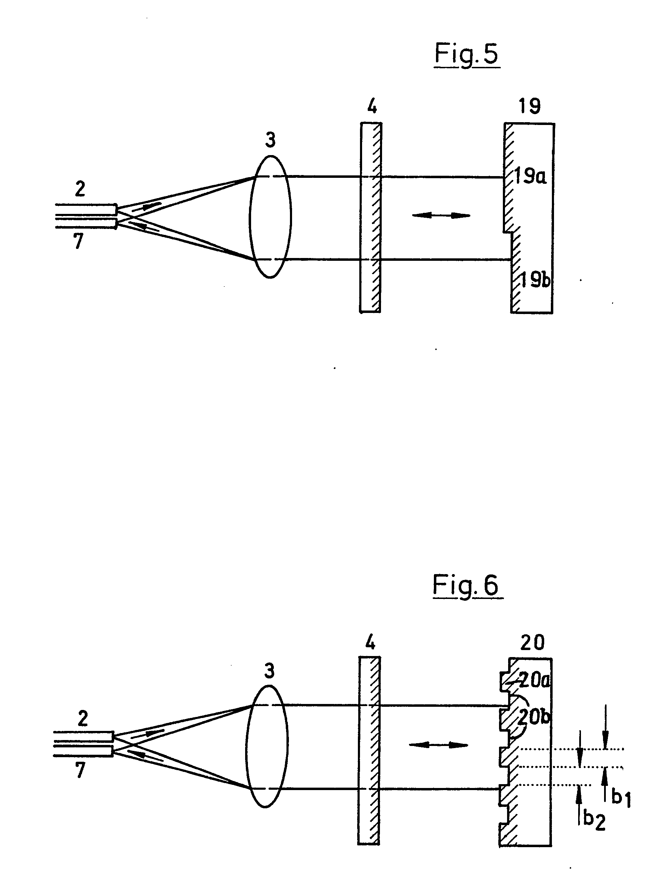

Die praktische Ausbildung der beschriebenen Charakteristik der Intensität I(a) durch Ineinander-Schachtelung zweier Fabry-Perot-Interferometer kann auf verschiedene Weise erfolgen, von denen beispielsweise einige in den Fig. 5 bis 8 schematisch dargestellt sind. Alle diese Ausführungsbeispiele entsprechen dem in Reflexion betriebenen Interferometer gemäss Fig. 2 wegen dessen grösserer Einfachheit. Der Verlauf der Intensität I(a) der Ausführungsbeispiele nach Fig. 5 bis 8 sieht deshalb quantitativ etwas anders aus als der Verlauf gemäss Fig. 3c, 4b und 4c (schmalere Minima, breitere Maxima), jedoch gleicht er diesen qualitativ (zwei verschieden hohe, eng benachbarte Maxima mit ausgeprägtem Minimum zwischen diesen).

Die einfachste Ausführungsform ist die nach Fig. 5. Hier ist der Reflektor 19 der Interferometers mit einer Stufe ausgestattet, deren Höhe etwa $\lambda/8$ beträgt. Dadurch erfährt das Licht, das vom unteren tieferliegenden Teil 19b der Stufe reflektiert wird, eine Verzögerung von etwa $\lambda/4$ gegenüber dem am oberen, höhergelegenen Teil 19a der Stufe reflektierten Licht. Zusammen mit dem Reflektor 4 bildet der untere Stufenteil 19b das eine Interferometer, während der obere Stufenteil 19a mit dem Reflektor 4 das andere Interferometer bildet. Die oben beschriebene notwendige ungleiche Aufteilung des Gesamtlichtstroms auf die beiden Teil-Interferometer wird bei dem Ausführungsbeispiel nach Fig. 5 dadurch erreicht, dass die Stufe nicht in der Mitte des verwendeten Lichtstrahls liegt, sondern etwas ausserhalb der Mitte. Zur Konstanthaltung des Aufteilungsverhältnisses ist es notwendig, die exzentrische relative Lage der Stufe zum Strahlengang durch eine besonders stabile Konstruktion zu gewährleisten.

Diese Problematik ist bei dem Ausführungsbeispiel nach Fig. 6 gemindert. Hier ist eine Vielzahl von Stufen, d.h. von hoch- und tiefliegenden Bereichen des Reflektors 20, vorgesehen, die jeweils dicht nebeneinaderliegen. Die Reflektoroberfläche hat hier also die Form eines Streifengitters. Wenn eine grössere Anzahl von Streifen (z.B. mehr als drei Streifen) im Querschnitt des Strahlengangs liegt, so ist das Reflexions- bzw. Transmissionssignal nahezu unabhängig von der relativen seitlichen Lage zwischen Strahlengang und Streifengitter.

Die erforderliche ungleiche Aufteilung wird in diesem Fall dadurch erzielt, dass das Verhältnis $r = b_1/b_2$ der Breiten $b_1$ und $b_2$ der hoch- und tiefliegenden Reflektorbereiche 20a bzw. 20b von eins verschieden gewählt wird ($r \neq 1$). Ein optimales Verhältnis im Sinne einer möglichst klaren Trennung der verschiedenen Triggerschwellenwerte liegt bei $r = 1,5$ (oder auch bei $1/r = 1,5$); das Verhältnis kann in der Praxis jedoch durchaus auch in dem weiten Bereich von $r = 1,1$ bis 10 (bzw. $1/r = 1,1$ bis 10) liegen.

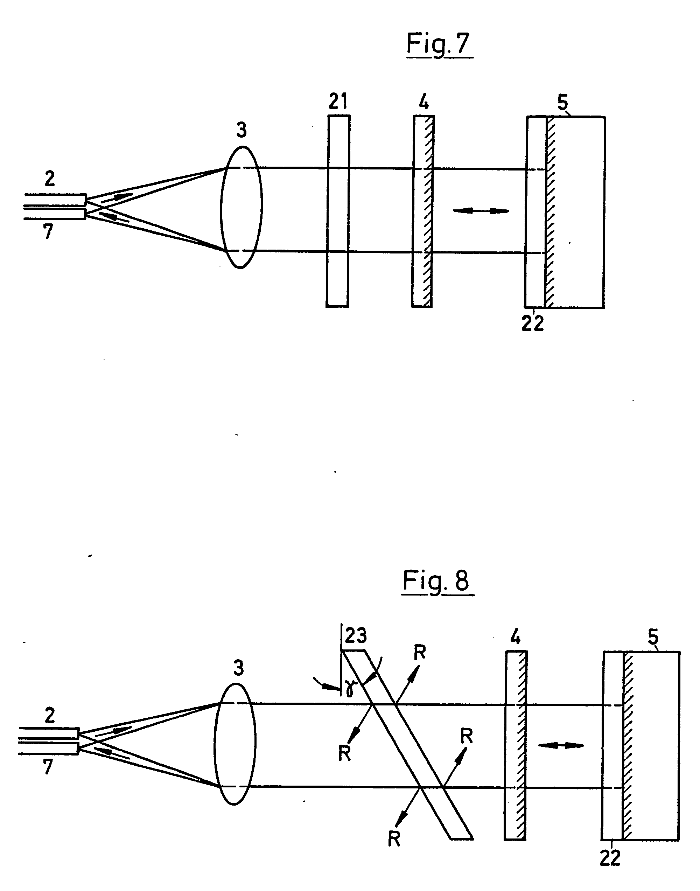

Bei den Ausführungsbeispielen nach Fig. 7 und 8 ist die Ineinanderschachtelung zweier Interferometer dadurch erreicht, dass zwischen den Reflektoren 4 und 5 eine optische Verzögerungsplatte 22 mit einer Verzögerung von $\lambda/8$ (entsprechend der oben angegebenen notwendigen Phasenverschiebung von $\pi/2$) angeordnet ist. Die Verzögerungsplatte 22 kann beispielsweise so orientiert sein, dass ihre schnelle Achsenrichtung in der Zeichnungsebene der Fig. 7 liegt, während ihre langsame Achse senkrecht dazu angeordnet ist.

Infolge der Verzögerung ist dann der optische Gangunterschied zwischen den beiden Reflektoren 4 und 5 grösser für polarisiertes Licht, dessen elektrisches Feld senkrecht zur Zeichnungsebene schwingt, im Verhältnis zu Licht, das parallel zur Zeichnungsebene polarisiert ist. Hier unterscheiden sich die beiden ineinander geschachtelten Teil-Interferometer also durch ihre Polarisationsrichtungen. Die notwendige ungleiche Gewichtung wird bei dem Ausführungsbeispiel der Fig. 7 dadurch bewirkt, dass in den Strahlengang ausserhalb des Interferometers ein linearer optischer Polarisator 21 eingesetzt ist, dessen Azimut einen Winkel $\alpha \neq 45°$ mit den Achsenrichtungen der Verzögerungsplatte 22 bildet. Optimal sind Azimutwinkel von $\alpha = 40°$ (bzw. 50°); in der Praxis kann der Azimutwinkel aber auch im Bereich von 10° bis 42° (bzw. 48° bis 80°) liegen. Zur Vermeidung einer Beeinträchtigung der Funktion der beiden Teil-Interferometer durch parasitäre Reflektionen an den Oberflächen der Verzögerungsplatte 22 kann diese entweder leicht gegen die Reflektoroberflächen geneigt angeordnet werden oder direkt auf der Oberfläche eines der Reflektoren 4 und 5 angebracht sein. Alternativ kann dies aber auch dadurch erreicht werden, dass die betreffende Reflexionsschicht auf die Rückseite der Verzögerungsplatte 22 aufgebracht ist.

Wird nach dem Ausführungsbeispiel nach Fig. 7 mit unpolarisiertem Licht gearbeitet, z.B. mit Licht einer lichtemittierenden Diode, so treten beim zweimaligen Durchgang des Lichts durch einen Polarisator erhebliche Lichtverluste auf (typischerweise von 70%). Diese Verluste sind bei dem Ausführungsbeispiel nach Fig. 8 ganz erheblich geringer. Auch hier ist vorausgesetzt, dass das aus der Eingangs-Lichtleitfaser 2 austretende Licht unpolarisiert ist und auch die Verzögerung, der Azimut und die Anordnung der Verzögerungsplatte 22 zwischen den Reflektoren dieselben sind wie beim Ausführungsbeispiel der Fig. 7. Anstelle eines Polarisators 21 ist bei dem Ausführungsbeispiel der Fig. 8 jedoch eine um den Winkel $\gamma$ geneigte Glasplatte 23 in den Strahlengang ausserhalb des Interferometers gestellt. An ihren beiden Oberflächen treten Reflexionsverluste beim Hin- und Rückgang des Lichtes auf, die durch die Pfeile R in Fig. 8 schematisch dargestellt sind. Wegen der Neigung der Glasplatte 23 hängt die Höhe dieser Reflexionsverluste von der Polarisation des Lichtes ab. Die Verluste sind am niedrigsten für Licht, das parallel zur Zeichnungsebene der Fig. 8 polarisiert ist, und am höchsten für senkrecht hierzu polarisiertes Licht. Bezüglich der Lichttransmission von der Eingangs-Lichtleiterfaser 2 zur Ausgangs-Lichtleiterfaser 7 wird deshalb das parallel zur Zeichnungsebene polarisierte Licht stärker gewichtet als das senkrecht zur Zeichnungsebene polarisierte Licht. Auf diese Weise wird erreicht, dass die Höhe der beiden Maxima des Intensitätssignals I(a) unterschiedlich ist. Praktisch muss der Winkel γ im Bereich von 10° bis 70° liegen; optimal ist ein Wert nahe dem sogenannten Brewster-Winkel, der für Glas bei ungefähr 56° liegt.

Es ist zu beachten, dass die beschriebenen verschiedenen Modifikationen des einen Reflektors des Interferometers selbstverständlich auch bei dem anderen Reflektor bzw. bei beiden Reflektoren gleichzeitig vorgesehen werden können, sofern dadurch die notwendige asymmetrische Charakteristik der Intensität I(a) erreicht wird.

Schliesslich ist zu beachten, dass anstelle des als optimal zu beachtenden Phasenunterschieds von π/2 zwischen den beiden Teil-Interferometern ebenso gut natürlich auch ein Phasenunterschied in der Nähe von 3π/2, 5π/2 und so weiter vorgesehen werden kann, welch letztere Phasenunterschiede jedenfalls modulo 2π mit dem oben genannten Phasenunterschied von π/2 vom Betrag her übereinstimmen.

Für eine möglichst deutliche Trennung der beiden ungleich hohen Maxima eines Doppelmaximums ist es günstig, wenn die sogenannte «Finesse» (d.h. das Verhältnis der Periodendauer zur Impulsdauer) der Teil-Interferometer im Bereich von 5 bis 10 liegt. Bei kleineren Werten der Finesse ist die Trennung der Maxima ungenügend, bei höheren Werten treten dagegen unnötig hohe Lichtverluste auf und wird die Toleranz für die Parallelität der Reflektoren unnötig eng.

**Patentansprüche**

1. Verfahren zur interferometrischen Messung der Länge der geradlinigen Komponente der von einem sich bewegenden Gegenstand durchlaufenen Bewegungsbahn und zur gleichzeitigen Erkennung der Bewegungsrichtung des Gegenstands, bei dem eine monochromatische Lichtstrahlung auf zwei hintereinanderliegende und relativ zueinander bewegbare Reflektoren geführt wird, die je Fabry-Perot-Teilinterferometer bilden und von denen mindestens einer teildurchlässig ist und von denen einer an den sich bewegenden Gegenstand anzuschliessen ist, die Lichtstrahlung von den Reflektoren auf einen Detektor geführt wird, dieser ein mit dem Abstand zwischen den beiden Reflektoren periodisch veränderliches Intensitätssignal an eine Triggerstufe abgibt, die ihrerseits bei Überschreitung bzw. Unterschreitung von Schwellenwerten für ihr Beaufschlagungssignal Ausgangssignale an eine Zählstufe abgibt, wozu die Schwellenwerte auf Werte im periodischen Bereich der möglichen Reflexionsintensität eingestellt werden, dadurch gekennzeichnet, dass die beiden genannten Reflektoren zwei ineinander vereinigte, aber durch ihre lateralen Positionen oder durch ihre Polarisationen unterscheidbare Fabry-Perot-Teilinterferometer bilden, deren Lichtstrahlungsflüsse unterschiedlich grosse Anteile des Gesamt-Lichtstrahlungsflusses sind und deren charakteristische Gangunterschiede sich so unterscheiden, dass das aus dem Gesamt-Lichtstrahlungsfluss resultierende Detektor-Intensitätssignal einen zur Erkennung der Bewegungsrichtung geeigneten asymmetrischen Verlauf mit einem Haupt- und einem Nebenmaximum unterschiedlicher Höhe sowie ein Haupt- und Nebenminimum verschiedener Tiefe pro Periode besitzt.

2. Verfahren nach Anspruch 1, dadurch gekennzeichnet, dass das Detektorsignal gleichzeitig an drei parallelgeschaltete Triggereinheiten je mit unterschiedlichen vorbestimmten Schwellenwerten weitergeführt wird und dass die Ausgangssignale von zwei der insgesamt drei Triggereinheiten einzeln zwei unterschiedlichen Eingängen eines rückstellbaren Binär-Zählers (Flip-Flop) zugeführt werden, dessen beide zueinander inverse Ausgangssignale einzeln den Eingängen von zwei «Und»-Gattern zugeführt werden, denen jeweils gleichzeitig das Ausgangssignal der dritten nicht an den Zähler angeschlossenen Triggereinheit zugeführt wird, und dass die zu dem zu messenden Weg proportionale Differenz der Anzahl der Gatter-Ausgangsimpulse von einem Vor-Rückwärts-Zähler ermittelt wird.

3. Vorrichtung zur interferometrischen Messung der Länge der geradlinigen Komponente der von einem sich bewegenden Gegenstand durchlaufenen Bewegungsbahn und zur gleichzeitigen Erkennung der Bewegungsrichtung des Gegenstands, mit einer monochromatischen Lichtquelle (1), mit einem in deren Strahlengang und vorrichtungsseitig feststehend angeordneten und für die Lichtstrahlung der Lichtquelle teilweise durchlässigen ersten Reflektor (4), mit einem ebenfalls im Strahlengang der Lichtquelle angeordneten und gegenüber dem ersten Reflektor vorrichtungsseitig parallel bewegbaren zweiten Reflektor (5), der an den sich bewegenden Gegenstand anzuschliessen ist, wobei die beiden Reflektoren Fabry-Perot-Teilinterferometer bilden, mit einem im Lichtstrahlengang hinter dem zweiten Reflektor (5) angeordneten Detektor (8), zur Messung der Reflexions- bzw. Transmissions-Strahlungsintensität und zur Abgabe eines zur gemessenen Strahlungsintensität proportionalen Intensitätssignals, mit einer vom Detektor-Intensitätssignal beaufschlagten Triggerstufe (9) mit vorbestimmtem Schwellenwert für ihr Beaufschlagungssignal, bei dessen Überschreitung bzw. Unterschreitung die Triggerstufe Ausgangssignale abgibt, mit einer Zählstufe (10) für die Triggerstufen-Ausgangssignale und ggf. mit einer der Zählstufe nachgeschalteten Einrichtung zur Anzeige und/oder Weiterverarbeitung des Zählstufenergebnisses, dadurch gekennzeichnet, dass die beiden genannten Reflektoren (4, 5; 4, 19; 4, 20) zwei ineinander vereinigte, durch ihre lateralen Positionen oder durch ihre Polarisationen unterscheidbare Fabry-Perot-Teilinterferometer bilden, deren Lichtstrahlungsflüsse unterschiedlich grosse Anteile des Gesamtlichtstrahlungsflusses sind und deren charakteristische Gangunterschiede sich so unterscheiden, dass das aus dem Gesamt-Lichtstrahlungsfluss resultierende, von der Bewegungskomponente periodisch abhängende Detektor-Intensitätssignal (I) einen zur Erkennung der Bewegungsrichtung geeigneten asymmetrischen Verlauf mit einem Haupt- und einem Nebenmaximum unterschiedlicher Höhe sowie einem Haupt- und einem Nebenminimum unterschiedlicher Tiefe pro Periode besitzt.

4. Vorrichtung nach Anspruch 3, dadurch gekennzeichnet, dass die Oberfläche eines (19; 20) der Reflektoren (4, 19; 4, 20) zwei Bereiche (19a, 19b; 20a, 20b) unterschiedlicher Reflexionsphasen aufweist, wobei das Flächenverhältnis der beiden Bereiche ungleich eins ist, oder zwischen den Reflektoren (4, 5) eine Platte (22) mit einer optischen Verzögerung von etwa 1/8 der Wellenlänge ($\lambda$) des Lichts der verwendeten Lichtquelle (1) angeordnet und im Strahlengang vor bzw. hinter den beiden Reflektoren (4, 5) entweder ein linearer Polarisator (21) mit einem Azimutwinkel ungleich 45° zur Achsrichtung der Verzögerungsplatte (22) oder eine geneigte lichtdurchlässige Platte (23) eingesetzt ist, durch welche beiden alternativen Ausbildungen der beschriebene Verlauf des Detektor-Intensitätssignals (I) mit einem Haupt- und einem Nebenmaximum sowie einem Haupt- und einem Nebenminimum erreicht ist.

5. Vorrichtung nach Anspruch 3 oder 4, dadurch gekennzeichnet, dass die Bereiche (19a, 19b; 20a, 20b) unterschiedlicher Reflexionsphasen solche Bereiche sind, deren Phasenunterschied zwischen ihren Reflexionen zwischen $0,1\,\pi$ und $0,8\,\pi$, vorzugsweise bei $0,5\,\pi$, liegt.

6. Vorrichtung nach Anspruch 3 oder 4, dadurch gekennzeichnet, dass die Bereiche unterschiedlicher Reflexionsphasen solche Bereiche sind, dass die Reflexionsphase des einen Bereichs für einen bestimmten Polarisationszustand um etwa $0,5\,\pi$ von der Reflexionsphase des anderen Bereichs für den zugehörigen orthogonalen Polarisationszustand abweicht.

7. Vorrichtung nach Anspruch 3 oder 4, dadurch gekennzeichnet, dass die Bereiche (19a, 19b; 20a, 20b) unterschiedlicher Reflexionsphasen durch eine gestufte Ausbildung der Oberfläche des Reflektors (19, 20) gebildete Bereiche sind, wobei die Stufenhöhe etwa 1/8 der Wellenlänge ($\lambda$) des Lichtes der verwendeten Lichtquelle (1) misst und die Stufung exzentrisch zum Strahlengang angeordnet ist.

8. Vorrichtung nach Anspruch 7, dadurch gekennzeichnet, dass die Oberfläche des Reflektors (20) mehrfach stufig ausgebildet ist, wobei alle durch die Stufung erhöht bzw. vertieft liegenden Bereiche in jeweils einer gemeinsamen Ebene liegen.

9. Vorrichtung nach Anspruch 8, dadurch gekennzeichnet, dass die Breite ($b_1$) der erhöht liegenden Bereiche (20a) ungleich der Breite ($b_2$) der vertieft liegenden Bereiche (20b) ist.

10. Vorrichtung nach Anspruch 9, dadurch gekennzeichnet, dass das Verhältnis der Breiten ($b_1$, $b_2$) der erhöht bzw. vertieft liegenden Bereiche (20a, 20b) etwa 1,5 oder 1/1,5 beträgt.

11. Vorrichtung nach Anspruch 4, dadurch gekennzeichnet, dass der Azimutwinkel des Polarisators (21) zwischen 10° und 42° bzw. 48° und 80° und insbesondere bei 40° bzw. 50° liegt.

12. Vorrichtung nach Anspruch 4, dadurch gekennzeichnet, dass die lichtdurchlässige Platte (23) eine unter einem Winkel ($\gamma$) von etwa 10° bis 70°, insbesondere unter etwa dem Brewster-Winkel, geneigte Platte ist.

13. Vorrichtung nach einem der Ansprüche 3 bis 12, dadurch gekennzeichnet, dass die Triggerstufe aus drei parallel geschalteten Triggereinheiten (12, 13, 14) je mit unterschiedlichen vorbestimmten Schwellenwerten ($I_1$, $I_2$, $I_3$) besteht und dass die Zählstufe ein rückstellbarer Binär-Zähler (Flip-Flop) (10) mit zwei Eingängen (15, 16), die einzeln an die Ausgänge von zwei (13, 14) der insgesamt drei Triggereinheiten (13, 14, 15) angeschlossen sind, und mit zwei Ausgängen (c, $\bar{c}$) ist, die einzeln an die Eingänge von zwei «Und»-Gattern (17, 18) angeschlossen sind, deren jeweils zweiter Eingang an den Ausgang der dritten Triggereinheit (12) angeschlossen ist, und dass die Differenz der Anzahl der Ausgangsimpulse beider Gatter (17, 18) die zu dem zu messenden Weg proportional ist, von einem Vor-Rückwärts-Zähler (24) ermittelt wird.

14. Vorrichtung nach Anspruch 13, dadurch gekennzeichnet, dass die Schwellenwerte ($I_1$, $I_2$, $I_3$) der drei Triggereinheiten (12, 13, 14) dem arithmetischen Mittel je zweier verschiedener Extrem-Werte des Detektor-Intensitätssignals (I) entsprechen, und zwar der Schwellenwert ($I_3$) der nicht an die Zählstufe (10) angeschlossenen Triggereinheit (12) dem arithmetischen Mittel aus den Werten des Hauptmaximums und des Nebenmaximums des Detektor-Intensitätssignals (I), der Schwellenwert ($I_2$) der einen (13) der beiden anderen Triggereinheiten (13, 14) dem arithmetischen Mittel aus den Werten des Nebenmaximums und des Nebenminimums des Detektor-Intensitätssignals (I) und der Schwellenwert ($I_1$) der anderen (14) der beiden weiteren Triggereinheiten (13, 14) dem arithmetischen Mittel aus den Werten des Hauptminimums und des Nebenminimums des Detektor-Intensitätssignals (I).

**Claims**

1. Method for the interferometric measurement of the length of the rectilinear component of the path of movement travelled by a moving object and for the simultaneous recognition of the direction of movement of the object, in which a monochromatic light radiation is conducted on to two reflectors lying one behind the other and movable in relation to one another, each forming Fabry and Pérot interferometers, of which reflectors one at least in partially transparent and one is to be connected to the moving object, the light radiation is conducted by the reflectors on to a detector, the latter delivers an intensity signal periodically variable with the distance between the two reflectors to a trigger stage which in turn, on overstepping or understepping of threshold values for its impingement signal delivers output signals to a counting stage, for which purpose the threshold values are adjusted to values in the periodic range of the possible radiation intensity, characterised in that the two said reflectors form two Fabry and Pérot interferometers united in one another but distinguishable by their lateral positions or by their polarisations, the light radiation fluxes of which are different proportions of the total light radiation flux and the characteristic action differences of which differ so that the detector intensity signal resulting from the total light radiation flux possesses an asymmetric course suitable for the recognition of the direction of movement, with a main maximum and a secondary maximum of different heights and a main minimum and a secondary minimum of different depths per period.

2. Method according to Claim 1, characterised in that the detector signal is passed on simultaneously to three parallel-connected trigger units each with different pre-determined threshold values and in that the output signals of two of the total of three trigger units are fed individually to two different inputs of a resettable binary counter (flip-flop), the two mutually inverse output signals of which are fed individually to the inputs of two «And»-gates to which, in each case simultaneously, the output signal of the third trigger unit, which is not connected to the counter, is fed, and in that the difference, proportional to the path to be measured, of the number of the gate output pulses is ascertained by a forward-backward counter.

3. Apparatus for the interferometric measurement of the length of the rectilinear component of the path of movement travelled by a moving object and for the simultaneous recognition of the direction of movement of the object, having a monochromatic light source (1), having a first reflector (4) arranged stationarily in the ray path of the light source and on the apparatus side and partially transparent for the light radiation of the light source, having a second reflector (5) likewise arranged in the ray path of the light source and movable parallel in relation to the first reflector on the apparatus side, which second reflector is to be connected to the moving object, the two reflectors forming Fabry and Pérot interferometers, having a detector (8) arranged in the light ray path behind the second reflector (5) for the measurement of the reflection and transmission radiation intensities and for the emission of an intensity signal proportional to the measured radiation intensity, having a trigger stage (9) upon which the detector intensity signal impinges, with pre-determined threshold value for its impingement signal, on overstepping or understepping of which the trigger stage delivers output signals, having a counting stage (10) for the trigger stage output signals and possibly having a device connected in series after the counting stage for the display and/or further processing of the counting stage result, characterised in that the two said reflectors (4, 5; 4, 19; 4, 20) form two Fabry and Pérot interferometers united in one another and distinguishable by their lateral positions or by their polarisations, the light radiation fluxes of which are different proportions of the total light radiation flux and the characteristic action differences of which differ in such a way that the detector intensity signal (I) resulting from the total light radiation flux and depending periodically upon the movement component possesses an asymmetric course suitable for the recognition of the direction of movement with a main maximum and a secondary maximum of different heights and a main minimum and a secondary minimum of different depths, per period.

4. Apparatus according to Claim 3, characterised in that either the surface of one (19; 20) of the reflectors (4, 19; 4, 20) comprises two zones (19a, 19b; 20a, 20b) of different reflection phases, the area ratio of the two zones being unequal to one, or between the reflectors (4, 5) a plate (22) is arranged having an optical delay of about 1/8th of the wave length ($\lambda$) of the light of the utilised light source (1) and either a linear polariser (21) with an azimuth angle not equal to 45° to the axial direction of the delay plate (22) or an inclined light-permeable plate (23) is inserted in the ray path before or after the two reflectors (4, 5), by which two alternative formations the described course of the detector intensity signal (I) with a main and a secondary maximum and a main and a secondary minimum is achieved.

5. Apparatus according to Claim 3 or 4, characterised in that the zones (19a, 19b; 20a, 20b) of different reflection phases are those zones the phase difference between the reflections of which lies between $0.1\,\pi$ and $0.8\,\pi$, preferably at $0.5\,\pi$.

6. Apparatus according to Claim 3 or 4, characterised in that the zones of different reflection phases are such zones that the reflection phase of the one zone for a specific polarisation state deviates by about $0.5\,\pi$ from the reflection phase of the other zone for the pertinent orthogonal polarisation state.

7. Apparatus according to Claim 3 or 4, characterised in that the zones (19a, 19b; 20a, 20b) of different reflection phases are zones formed by a stepped formation of the surface of the reflector (19, 20), the step height measuring about 1/8th of the wave length ($\lambda$) of the light of the utilised light source (1) and the stepping being arranged eccentrically of the ray path.

8. Apparatus according to Claim 7, characterised in that the surface of the reflector (20) is made with multiple stepping, and all zones lying elevated or depressed due to the stepping lie in one common plane for each.

9. Apparatus according to Claim 8, characterised in that the width ($b_1$) of the elevated zones (20a) is unequal to the width ($b_2$) of the depressed zones (20b).

10. Apparatus according to Claim 9, characterised in that the ratio of the widths ($b_1$, $b_2$) of the elevated and depressed zones (20a, 20b) amounts to about 1.5 or 1/1.5.

11. Apparatus according to Claim 4, characterised in that the azimuth angle of the polariser (21) lies between 10° and 42° or 48° and 80° and especially at 40° and 50° respectively.

12. Apparatus according to Claim 4, characterised in that the transparent plate (23) is a plate inclined at an angle ($\gamma$) of about 10° to 70°, especially at approximately the Brewster's angle.

13. Apparatus according to one of Claims 3 to 12, characterised in that the trigger stage consists of three parallel-conneted trigger units (12, 13, 14) each with different pre-determined threshold values ($I_1$, $I_2$, $I_3$) and in that the counting stage is a resettable binary counter (flip-flop) (10) with two inputs (15, 16), which are connected individually to the outputs of two (13, 14) of the total of three trigger units (13, 14, 15), and which two outputs ($c$, $\bar{c}$) which are connected individually to the inputs of two «And»-gates (17, 18) the second input of each of which is connected to the output of the third trigger unit (12), and in that the difference of the number of the output pulses of the two gates (17, 18), which is proportion-

al to the path to be measured, is ascertained by a forward-backward counter (24).

14. Apparatus according to Claim 13, characterised in that the threshold values ($I_1$, $I_2$, $I_3$) of the three trigger units (12, 13, 14) correspond to the arithmetic mean of two in each case different extreme values of the detector intensity signal (I), namely the threshold value ($I_3$) of the trigger unit (12) not connected to the counting stage (10) corresponds to the arithmetic mean of the values of the main maximum and the secondary maximum of the detector intensity signal (I), the threshold value ($I_2$) of the one (13) of the other two trigger units (13, 14) corresponds to the arithmetic mean of the values of the secondary maximum and of the secondary minimum of the detector intensity signal (I) and the threshold value ($I_1$) of the other (14) of the two further trigger units (13, 14) corresponds to the arithmetic mean of the values of the main minimum and the secondary minimum of the detector intensity signal (I).

## Revendications

1. Procédé pour la mesure interférométrique de la longueur des composants rectilignes de la trajectoire parcourue par un objet mobile et pour détecter simultanément la direction de mouvement de l'objet, suivant lequel un rayonnement lumineux monochromatique est dirigé sur deux réflecteurs placés l'un derrière l'autre, mobiles l'un par rapport à l'autre, constituant chacun un interféromètre partiel de Fabry-Perot, dont au moins un est partiellement transparent et dont l'un doit être relié à l'objet mobile, le rayonnement lumineux provenant des réflecteurs est envoyé sur un détecteur qui fournit un signal d'intensité, variable périodiquement en fonction de l'espacement entre les deux réflecteurs, à un étage déclencheur, qui fournit à son tour, lors d'un dépassement par excès ou d'un dépassement par défaut de valeurs de seuil pour son signal de sollicitation, des signaux de sortie à un étage de comptage, les valeurs de seuil étant à cet égard réglées à des valeurs rentrant dans la gamme périodique de l'intensité de réflexion possible, caractérisé en ce que les deux réflecteurs précités constituent deux interféromètres partiels de Fabry-Perot combinés l'un dans l'autre mais pouvant cependant être différenciés par leurs positions latérales ou par leurs polarisations, leurs flux de rayonnement lumineux étant des proportions différentes du flux total de rayonnement lumineux tandis que leurs différences caractéristiques de fonctionnement se différencient suffisamment pour que le signal d'intensité de détecteur résultant du flux total de rayonnement lumineux présente un profil asymétrique, approprié pour une détection de la direction de mouvement et comportant un maximum principal et un maximum secondaire de hauteurs différentes ainsi qu'un minimum principal et un minimum secondaire de profondeurs différentes par période.

2. Procédé selon la revendication 1, caractérisé en ce que le signal de détecteur est simultanément transmis additionnellement à trois unités de déclenchement branchées en parallèle et comportant chacune des valeurs de seuil prédéterminées différentes et en ce que les signaux de sortie de deux des trois unités de déclenchement prévues au total sont appliqués individuellement à deux entrées différentes d'un compteur binaire régressif (bascule), dont les deux signaux de sortie inverses l'un de l'autre sont appliqués individuellement aux entrées de deux portes «ET», dont à chaque fois simultanément le signal de sortie de la troisième n'est pas appliqué à l'unité de déclenchement reliée au compteur, et en ce que la différence, proportionnelle à la distance à mesurer, entre les nombres d'impulsions de sortie des portes et établie par un compteur progressif-régressif.

3. Dispositif pour la mesure interférométrique de la longueur des composants rectilignes de la trajectoire parcourue par un objet mobile et pour la détection simultanée de la direction de mouvement de l'objet, comportant une source lumineuse monochromatique (1), un premier réflecteur (4) placé dans le trajet de ses rayons, immobile dans le dispositif et partiellement transparent pour le rayonnement lumineux de la source lumineuse (1), un second réflecteur (5) placé également dans le trajet des rayons de la source lumineuse, déplaçable parallèlement au premier réflecteur et qui doit être relié à l'objet mobile, les deux réflecteurs formant un interféromètre partiel de Fabry-Perot, un détecteur (8) disposé dans le trajet des rayons lumineux en arrière du second réflecteur (5) et servant à la mesure de l'intensité du rayonnement réfléchi ou du rayonnement transmis ainsi qu'à la génération d'un signal d'intensité proportionnelle à l'intensité de rayonnement mesurée, un étage déclencheur (9) sollicité par le signal d'intensité du détecteur, son signal de sollicitation étant associé à une valeur de seuil prédéterminée dont le dépassement par excès ou le dépassement par défaut fait en sorte que l'étage déclencheur produise à sa sortie des signaux, un étage de comptage (10) des signaux de sortie de l'étage déclencheur, et le cas échéant un dispositif branché en aval de l'étage de comptage pour indiquer et/ou traiter additionnellement le résultat de l'étage de comptage, caractérisé en ce que les deux réflecteurs précités (4, 5; 4, 19; 4, 20) constituent deux interféromètres partiels de Fabry-Perot combinés l'un dans l'autre, pouvant être différenciés par leurs positions latérales ou par leurs polarisations dont les flux de rayonnement lumineux correspondent à des proportions différentes du flux total de rayonnement lumineux et dont les différences caractéristiques de fonctionnement se différencient suffisamment pour que le signal d'intensité de détecteur (I), résultant du flux total de rayonnement lumineux et dépendant périodiquement de la composante de mouvement, présente un profil asymétrique, approprié pour une détection de la direction de mouvement et comportant un maximum principal et un maximum secondaire de hauteurs différentes ainsi qu'un minimum principal et un minimum secondaire de profondeurs différentes par période.

4. Dispositif selon la revendication 3, caractérisé en ce que soit la surface d'un (19; 20) des réflecteurs (4, 19; 4, 20) comporte deux zones (19a, 19b; 20a, 20b) de phases de réflexion différentes, le rapport entre les surfaces des deux zones étant différent de un, soit il est prévu entre les réflecteurs (4, 5) une plaque (22) ayant un retardement optique d'environ 1/8 de longueur d'onde ($\lambda$) de la lumière de la source lumineuse utilisée (1) et il est prévu dans le trajet des rayons, en avant ou en arrière des deux réflecteurs (4, 5), soit un polariseur linéaire (21) faisant un angle azimutal différent de 45° avec la direction axiale de la plaque de retardement (22), soit une plaque inclinée transparente à la lumière (23), de manière à obtenir au moyen d'un des deux agencements précités le profil décrit du signal d'intensité de détecteur (I) comportant un maximum principal et un maximum secondaire ainsi qu'un minimum principal et un minimum secondaire.

5. Dispositif selon la revendication 3 ou 4, caractérisé en ce que les zones (19a, 19b; 20a, 20b) de phases de réflexion différentes sont des zones dont la différence de phases entre leurs réflexions est comprise entre 0,1 $\pi$ et 0,8 $\pi$, en étant avantageusement de 0,5 $\pi$.

6. Dispositif selon la revendication 3 ou 4, caractérisé en ce que les zones de phases de réflexion différentes sont des zones telles que la phase de réflexion d'une zone pour une condition déterminée de polarisation diffère d'environ 0,5 $\pi$ de la phase de réflexion de l'autre zone pour la condition de polarisation orthogonale associée.

7. Dispositif selon la revendication 3 ou 4, caractérisé en ce que les zones (19a, 19b; 20a, 20b) de phases de réflexion différentes sont des zones créées par un profil en gradin de la surface du réflecteur (19, 20), auquel cas la hauteur de gradin est égale à environ 1/8 de la longueur d'onde ($\lambda$) de la lumière de la source lumineuse utilisée (1) et le gradin est disposé excentriquement par rapport au trajet des rayons.

8. Dispositif selon la revendication 7, caractérisé en ce que la surface du réflecteur (20) est pourvue de plusieurs gradins, toutes les zones relevées ou abaissées par le profil en gradins étant respectivement situées dans un plan commun.

9. Dispositif selon la revendication 8, caractérisé en ce que la largeur ($b_1$) des zones relevées (20a) est différente de la largeur ($b_2$) des zones abaissées (20b).

10. Dispositif selon la revendication 9, caractérisé en ce que le rapport entre les largeurs ($b_1$, $b_2$) des zones relevées ou abaissées (20a, 20b) s'élève à environ 1,5 ou 1/1,5.

11. Dispositif selon la revendication 4, caractérisé en ce que l'angle azimutal du polariseur (21) est compris entre 10° et 42° ou bien entre 48° et 80° et il est notamment de 40° ou 50°.

12. Dispositif selon la revendication 4, caractérisé en ce que la plaque transparente à la lumière (23) est une plaque inclinée d'un angle ($\gamma$) d'environ 10° à 70°, notamment un peu inférieur à l'angle de Brewster.

13. Dispositif selon l'une des revendications 3 à 12, caractérisé en ce que l'étage déclencheur se compose de trois unités de déclenchement (12, 13, 14) branchées en parallèle et comportant des valeurs de seuil prédéterminées respectivement différentes ($I_1$, $I_2$, $I_3$), et en ce que l'étage de comptage est un compteur binaire régressif (bascule) (10) comportent deux entrées (15, 16), qui sont reliées individuellement aux sorties de deux des trois unités de déclenchement (13, 14, 15), ainsi que deux sorties ($c$, $\bar{c}$), qui sont reliées individuellement aux entrées de deux portes «ET» (17, 18), dont la seconde entrée respective est reliée à la sortie de la troisième unité de déclenchement (12), et en ce que la différence entre les nombres des impulsions de sortie des deux portes (17, 18), qui est proportionnelle à la distance à mesurer, est déterminée par un compteur progressif-régressif (24).

14. Dispositif selon la revendication 13, caractérisé en ce que les valeurs de seuil ($I_1$, $I_2$, $I_3$) des trois unités de déclenchement (12, 13, 14) correspondent à la moyenne arithmétique de respectivement deux valeurs extrêmes différentes dusignal d'intensité de détecteur (I), et notamment la valeur de seuil ($I_3$) de l'unite de déclenchement (12) non reliée à l'étage de comptage (10) correspond à la moyenne arithmétique des valeurs du maximum principal et du maximum secondaire du signal d'intensité de détecteur (I), la valeur de seuil ($I_2$) d'une (13) des deux autres unités de déclenchement (13, 14) correspond à la moyenne arithmétique des valeurs du maximum secondaire et du minimum secondaire du signal d'intensité de détecteur (I), et la valeur de seuil ($I_1$) de l'autre (14) des deux autres unités de déclenchement (13, 14) correspond à la moyenne arithmétique des valeurs du minimum principal et du minimum secondaire du signal d'intensité de détecteur (I).

0 099 040

Fig.1

Fig. 2

11

0 099 040

Fig. 3

13

0 099 040

Fig. 4        (a)

vorwärts (b)

rückwärts (c)

## Fig.5

## Fig. 6

## Fig. 7

## Fig. 8